# EUROPEAN PATENT APPLICATION

(11) **EP 1 427 194 A2**
(43) Date of publication of application: **09.06.2004**
(21) Application number: 03026737.1
(22) Date of filing: 21.11.2003
(51) Int. Cl.: H04N 5/262, H04N 5/232

(54) **Document camera**

(30) Priority: 05.12.2002 JP 2002353187
(71) Applicant: NEC Viewtechnology, Ltd., Tokyo (JP)
(72) Inventor: Nakamura, Toshiaki, Tokyo (JP)
(74) Representative: Glawe, Delfs, Moll & Partner

(57) **Abstract**

A document camera is provided for preventing a camera unit from interfering with works such as a change of one document to another. Camera unit of document camera is disposed above script base at a location away from the center of script base to prevent camera unit from interfering with the head or hand of a user. Simultaneously, light source is placed in proximity to camera unit to prevent regularly reflected light from script base from introducing into an optical system of camera unit, thus producing a fine image. Image signal processor is further provided for eliminating a trapezoidal distortion caused by a change in the position at which camera unit is attached.

## Description

### BACKGROUND OF THE INVENTION

### 1. Field of the Invention:

The present invention relates to a document camera for capturing documents such as a flat manuscript, a solid figure, and a slide film, which can be subjects, for delivery to a display device such as a projector and a television monitor.

### 2. Description of the Related Art:

In presentations and the like, a document camera is generally used for capturing documents such as graphic originals made of paper, solid figures and slide films for conversion into a video signal which is supplied to a display device such as a projector and a television monitor for displaying the captured documents.

This type of document camera is disclosed, for example, in JP-2000-138856-A which is directed to a presentation system that has an optical path switching mirror provided independently of a main optical system in order for a single camera to capture a remotely positioned document and a document placed on a script base. At this stage, however, a typical presentation system still comprises a camera disposed above a script base exclusively for capturing only a document placed on the script base with the intention of avoiding a complicated structure and an increase of factors which can cause a failure.

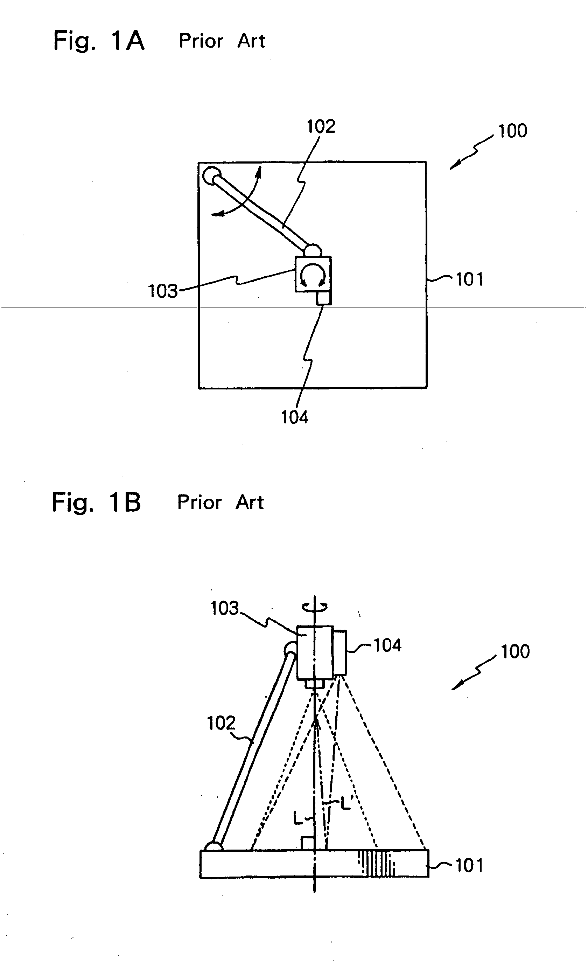

Figs. 1A and 1B illustrate how to use conventional document camera 100 which has camera unit 103 disposed above a script base, wherein Fig. 1A shows document camera 100 viewed from above, and Fig. 1B shows document camera 100 viewed from the left.

Document camera 100 comprises script base 101 for placing a document thereon; arm 102 mounted on a peripheral region of script base 101 for pivotal movement about the proximal end thereof; an image capture means rotatably mounted at the distal end of arm 102, i.e., camera unit 103 having an imager device and an optical system integrally incorporated therein; and light source 104 for illumination placed in proximity to camera unit 103. It should be noted that arm 102 is pivotably mounted and camera unit 103 is rotatably mounted only as measures which are taken merely in consideration of a storage space and the like of document camera 100.

For capturing a document, arm 102 is drawn from a rest position, not shown, and moved, followed by rotating camera unit 103 for setting the position and the posture thereof as illustrated in Figs. 1A and 1B to put camera unit 103 into commission. This is the relative positional relationship between camera unit 103 and script base 101 which should be essentially established.

Next, a document such as a paper is placed on the top of script base 101, and is captured by camera unit 103. In this event, light source 104 is turned on as required for illuminating the document.

Camera unit 103 contains an imager device such as CCD which converts the image of the document focused thereon into a video signal through a photo-electric conversion. The video signal is then delivered to a display device such as a projector or a television monitor electrically connected to document camera 100. Finally, the display device projects a projection image corresponding to the video signal supplied thereto onto a screen or the like, thereby displaying the image of the document.

However, in conventional document camera 100 as illustrated in Figs. 1 A and 1 B, camera unit 103 must be positioned right above the center of script base 101 due to a need for capturing a document on script base 101 without distortion. More specifically, camera unit 103 must be positioned such that optical axis L of the optical system of camera unit 103 is perpendicular to the plane of script base 101 and passes through the center of script base 101, more strictly, the center of a document placed thereon.

As a result, when a user of document camera 100 changes from one document to another on script base 101, or points to a document for explanation, the user can hit the head or hand against camera unit 103 in some cases and therefore is obstructed by camera unit 103 in his activities.

Also, when a document is captured using light source 104 placed in proximity to camera unit 103 for illumination, particularly when a lustrous document is illuminated, portion L' of regularly reflected light from light source 104 is introduced into the screen to cause halation and the like, thereby possibly failing to produce a precise image.

### SUMMARY OF THE INVENTION

It is an object of the present invention to provide a document camera which is designed to prevent an image capture means from obstructing the user in a presentation and the like.

It is another object of the present invention to provide a document camera which is capable of preventing the introduction of reflected light from a light source disposed in proximity to an image capture means.

The present invention provides a document camera which includes a script base for placing thereon a document to be captured, image capture means for capturing the document placed on the script base to generate a moving image signal, and signal output means for delivering the moving image signal to the outside. The document camera is characterized in that the image capture means has an imager device and an optical system integrally incorporated therein, and the image capture means is disposed above the script base at a location away from the center of the script base.

As mentioned above, the image capture means for use in capturing a document is positioned above the script base in a lateral region away from the center of the script base, i.e., from the center of the document, so that the image capture means will not interfere with the head or hand of a user of the document camera even when the user changes one document from another on the script base or points to a document for explanation.

When a light source is provided for illuminating a document, the light source is preferably placed in proximity to the image capture means.

With the light source placed in proximity to the image capture means away from the center of the script base in the lateral direction, light emitted from the light source impinges on a document placed on the script base, and is regularly reflected in a direction opposite to the direction in which the light is emitted.

Therefore, the reflected light will not be directly incident on the optical system of the image capture means, so that even if a lustrous paper is used as a document, it is possible to prevent a deteriorated image due to the introduction of the regularly reflected light from light source 5, for example, halation and the like, thus producing a precise image.

Preferably, the document camera further includes an image signal processor disposed between the image capture means and signal output means for correcting a distortion of an image captured by the imager device.

Since the image capture means is disposed above the script base at a location away from the center of the script base in the lateral direction, the image capture means should be mounted at an angle to the plane of the script base such that the optical axis of the optical system thereof orients generally toward the center of the script base.

The image capture means thus mounted results in a so-called "diagonal shot," causing a distortion in an image captured by the imager device.

To eliminate such a distortion, the document camera of the present invention has the image signal processor disposed between the image capture means and signal output means for correcting a distortion of an image captured by the imager device, so that the distortion caused by the diagonal shot is corrected through image processing in software.

Consequently, a precise image can be delivered to a display device such as a projector and a monitor television.

Also, the image signal processor preferably has a keystone distortion correcting function for correcting an optical distortion caused by an inclination of the optical axis of the optical system with respect to the script base.

Within distortions caused by the inclined optical axis of the optical system with respect to the script base, the most affecting one is a distortion caused by a change in photograph scaling factor, i.e., a trapezoidal distortion which results from a phenomenon that a portion of the script base further away from the image capture means appears smaller, while a portion of the script base closer to the image capture means appears larger in a resulting image. Therefore, a good image can be generally produced by correcting this distortion.

The image signal processor may further have a correction factor adjusting function for varying a correction factor in accordance with a change in the focal distance of the optical system.

When the optical system of the image capture means is implemented by a zoom lens, a varying distortion is present in accordance with a change in the focal distance of the optical system. This is because there is a perspective compression effect peculiar to a telephoto lens in a longer focal distance range and a perspective emphasis effect peculiar to a wide lens in a shorter focal distance range.

The distortion can be suitably corrected for a particular focal distance of the optical system at all times by changing a distortion correction factor in accordance with a change in the focal distance of the optical system.

Also, the image signal processor may further have a distortion correcting function for correcting a distortion which varies with a change in the focal distance of the optical system in addition to the keystone distortion correcting function.

Generally, the optical system implemented by a zoom lens suffers more from a barrel distortion at a shorter focal distance and a pincushion distortion at a longer focal distance. Thus, a more appropriate image can be produced by correcting the distortion in accordance with a change in the focal distance.

The above and other objects, features, and advantages of the present invention will become apparent from the following descriptions based on the accompanying drawings which illustrate an example of a preferred embodiment of the present invention.

### BRIEF DESCRIPTION OF THE DRAWINGS

Figs. 1A and 1B generally illustrate the configuration of a conventional document camera, where Fig. 1A is a top plan view, and Fig. 1B is a side view;
Figs. 2A and 2B illustrate the configuration of a document camera according to one embodiment of the present invention, where Fig. 2A is a top plan view, and Fig. 2B is a side view; and
Fig. 3 is a schematic block diagram illustrating the internal configuration of the document camera in the embodiment of Fig. 2A and 2B.

### DETAILED DESCRIPTION OF THE PREFERRED EMBODIMENTS

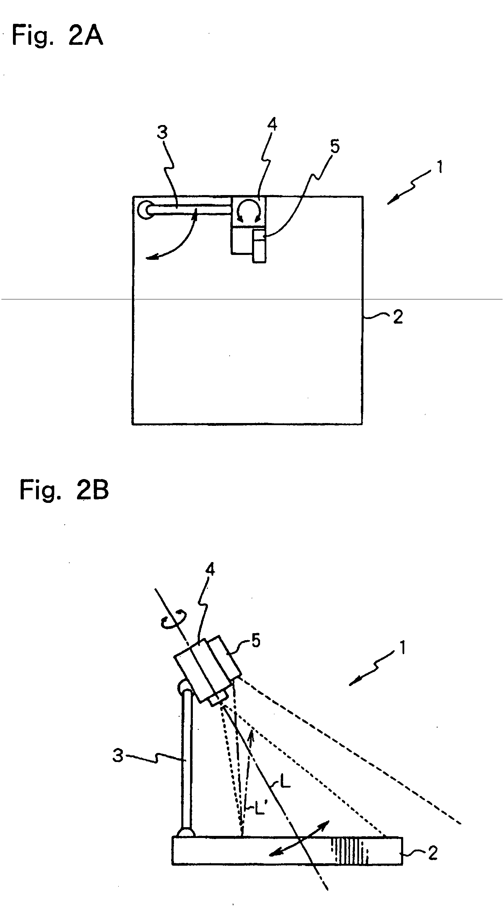

In the following, one embodiment of the present invention will be described with reference to the accompanying drawings. Figs. 2A and 2B illustrate the appearance of document camera 1 according to one embodiment of the present invention, where Fig. 2A illustrates document camera **1** in use viewed from above, and Fig. 2B illustrates document camera 1 viewed from the left.

The main structure of document camera 1 according to this embodiment comprises script base 2 for placing thereon a document which is a subject to be captured; arm 3 mounted in a peripheral region of script base 2 for pivotal movement about the proximal end thereof; and an image capture means rotatably mounted at the distal end of arm 3, i.e., camera unit 4 having an imager device and an optical system integrally incorporated therein; and light source 5 placed in proximity to camera unit 4 for illumination.

Camera unit 4 mounted to arm 3 is allowed to rotate about optical axis L of the optical system, and a change in posture for waving optical axis L in an arbitrary direction with reference to the normal axis. In this event, light source 5 moves together with camera unit 4.

The optical system of camera unit 4, which comprises a zoom lens, drives a stepping motor provided therein to move a portion of the optical system to permit a change in the focal distance of the overall optical system. In the designing of optical systems, distortion is generally minimized in a middle focal distance range. However, this type of lens is characterized by larger barrel distortion caused by zooming to a shorter focal distance and larger pincushion distortion caused by zooming to a longer focal distance. In addition, emphasized perspective, i.e., a larger image angle in the shorter focal distance range results in increased keystone distortion in the event of a "diagonal shot," while compressed perspective, i.e., a narrower angle in the longer focal distance range results in reduced keystone distortion.

Arm 3 can be placed at a rest position, not shown, and a use position shown in Figs. 2A and 2B, where camera unit 4, which embodies the image capture means, is positioned above script base 2 at a location away from the center of script base 2. Specifically, the relative positional relationship which should be essentially established between camera unit 4 and script base 2 during a use of document camera 1 is exactly illustrated in Figs. 2A and 2B, which is clearly different from the relative positional relationship in the prior art example illustrated in Figs. 1A and 1B.

In addition, camera unit 4 is adjusted in posture and rotational position such that optical axis L of the optical system of camera unit 4 substantially orients toward the center of script base 2, and simultaneously, the four sides of a substantially rectangular frame of camera unit 4 are substantially parallel with corresponding four sides of script base 2.

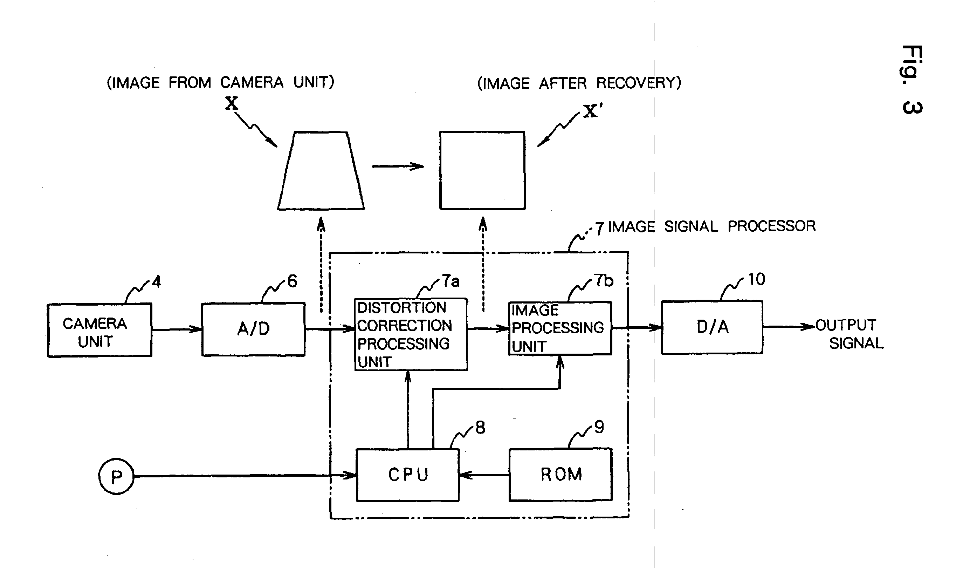

Fig. 3 is a schematic block diagram illustrating the internal configuration of document camera 1 according to this embodiment.

Image signal processor 7 for correcting an image for distortion is disposed between A/D converter circuit 6 which receives a video signal from the imager device incorporated in camera unit 4, and D/A converter circuit 10 which is a signal delivering means for delivering a final video signal to the outside.

Image signal processor 7 is mainly comprised of distortion correction processing unit 7a and image processing unit 7b. Distortion correction processing unit 7a has a keystone distortion correcting function for correcting an optical distortion caused by an inclination of optical axis L of the optical system in camera unit 4 with respect to script base 2, and a correction factor adjusting function for changing a correction factor in the keystone distortion correcting function in accordance with a change in the focal distance (zooming) of the optical system in camera unit 4. Image processing unit 7b has a distortion correcting function for correcting a distortion in accordance with a change in the focal distance of the optical system in camera unit 4.

Further, image signal processor 7 comprises CPU 8 for operational processing, and ROM 9 which stores a variety of parameters in the form of data table for use in keystone distortion correction processing and distortion correction processing, later described.

The data table in ROM 9 stores parameters for the keystone distortion correction processing and parameters for the distortion correction processing for each of some focal distance sections which make up the overall focal distance range from the shortest focal distance to the longest focal distance of the zoom lens.

CPU 8 receives a signal from pulse coder P for detecting a rotational position of the stepping motor for moving a portion of the optical system in camera unit 4 for zooming, i.e., substantially a current focal distance of the optical system, references the data table stored in ROM 9 to read parameters for the keystone distortion correction corresponding to the current focal distance for delivery to distortion correction processing unit 7a. Similarly, CPU 8 references the data table stored in ROM 9 to read parameters for the distortion correction corresponding to the current focal distance for delivery to image processing unit 7b.

Next, the overall processing operation of document camera 1 according to this embodiment will be described with reference to Fig. 3.

A document placed on script base 2, such as one from a variety of scripts, is captured by camera unit 4, and focused on the imager device such as CCD through the optical system which comprises a zoom lens. The imager device of camera unit 4 photo-electrically converts the image into a video signal which is applied to A/D converter circuit 6 which then converts the video signal into a digital signal.

Since the image capture processing through the photo-electric conversion and digital signal conversion is repeatedly performed at a predetermined cycle, the resulting video signal is substantially regarded as a moving image signal.

Of course, the image capture processing may be performed only once as required for preserving a resulting digital signal in a frame memory or the like, such that the video signal is utilized substantially as a still image.

Then, the digitally converted video signal is applied to image signal processor 7.

The image represented by the video signal, however, includes a keystone distortion which is an optical distortion caused by inclined optical axis L of the optical system, so that even if a document placed on script base 2 has a completely square contour, the shape of the captured document will be distorted into a trapezoid as generally indicated by reference X in Fig. 3. Actually, one side of the document positioned on the right-hand side on script base 2 in Fig. 2B corresponds to the shorter side of trapezoid X in Fig. 3, and the opposite side of the document corresponds to the longer side of trapezoid X in Fig. 3.

The digital signal converted from the video signal is first read into distortion correction processing unit 7a of image signal processor 7. In this event, CPU 8 searches the data table in ROM 9 based on information on a current focal distance of the optical system to read parameters for the keystone distortion correction corresponding to the current focal distance for delivery to distortion correction processing unit 7a. In response, distortion correction processing unit 7a uses the parameters for the keystone distortion correction corresponding to the current focal distance to execute the keystone distortion correction processing for correcting the optical distortion caused by inclined optical axis L of the optical system in camera unit 4.

The distortion correction processing has been already known as a "deform command" such as a "perspective method" even in commercially available application programs for image processing, and is configured to permit the user to freely specify the magnitude of the correction by entering numerical values for the parameters. Thus, description on the algorithm of the processing itself is omitted.

When the current focal distance is short, i.e., when the zoom lens of the optical system is zoomed down to a short focal distance, a large distortion must be present, so that a strong correction should be made for the image in accordance with the aforementioned parameters. Conversely, when the current focal distance is long, i.e., when the zoom lens of the optical system is zoomed up to a long focal distance, small distortion must be present, so that a weak correction should be made for the image in accordance with the aforementioned parameters.

This image distorted into a trapezoid, as indicated by reference X in Fig. 3 is recovered to the original shape as indicated by reference X' in Fig. 3 by the distortion correction processing which inserts or drops image data in a manner analogous to interpolation.

Then, the image corrected for the distortion in the foregoing manner is further read into image processing unit 7b. Like distortion correction processing unit 7a, image processing unit 7b uses the parameters delivered from CPU 8, i.e., the parameters for the distortion correction corresponding to the current focal distance to perform the distortion correction processing for correcting the image for a possible distortion.

Since the distortion correction processing has been already known as a "filtering effect" such as "pinch" even in commercially available application programs for image processing, description on the algorithm of the processing itself is omitted. When the current focal distance is short, i.e., when the zoom lens of the optical system is zoomed down to a short focal distance, a barrel distortion must be present, so that a correction should be made for transforming the barrel shape into a rectangular shape in accordance with the aforementioned parameters. Conversely, when the current focal distance is long, i.e., when the zoom lens of the optical system is zoomed up to a long focal distance, a pincushion distortion must be present, so that a correction should be made for transforming the pincushion shape into a rectangular shape in accordance with the aforementioned parameters.

When the current focal distance of the optical system substantially matches a middle focal distance at which the distortion is minimized in design, the substantial distortion correction processing is omitted, or the distortion correction processing is performed with the amount of correction being set to zero.

The image indicated by reference X in Fig. 3 is an image captured by camera unit 4 at the middle focal distance at which the distortion is minimized, but even if this image is captured using a shorter focal distance region or a longer focal distance region of the zoom lens to cause a barrel or a pincushion distortion, the aforementioned distortion correction processing can generally remove the distortion.

After removing the keystone distortion which is a trapezoidal distortion caused by inclined optical axis L of the optical system, and a majority of barrel or pincushion distortion caused depending on the focal distance of the optical system as described above, the resulting video signal is converted into an analog signal by D/A converter circuit 10 which is a signal output means, and applied to a display device such as a projector or a monitor television as an output signal, so that an appropriate image is projected substantially without keystone distortion or distortion.

When the display device such as a projector and monitor television supports digital signals, D/A converter circuit 10 is not required, in which case the function of the final signal output means is additionally served by image signal processor 7.

The foregoing embodiment has been described in connection with camera unit 4 which has a substantially rectangular frame, and is moved away from the center of script base 2 while the frame is maintained in parallel with the corresponding sides of script base 2, as illustrated in Figs. 2A and 2B. Additionally, even when the position of camera unit 4 is moved diagonally backward so that the resulting image is distorted into a rhombic shape, the distorted image can be corrected by the document camera in the configuration described in the foregoing embodiment.

Also, even when light source 5 is turned on to illuminate a document on script base 2, regularly reflected light L' reflected from the surface of the document travels in a direction opposite to the direction in which light source 5 and camera unit 4 are away from the center of script base 2. Thus, the regularly reflected light will not be directly incident on the optical system of camera unit 4, so that even if a lustrous paper is used as a document, it is possible to prevent a deteriorated image due to the introduction of the regularly reflected light from light source 5, for example, halation and the like.

This results in the elimination of the need for advanced coating technologies for preventing halation, flare, ghost, and the like, as well as the need for an advanced optical design for fully correcting distortions over the overall focal distance range of a zoom lens, thus advantageously reducing the production cost of the whole document camera.

In place of the distortion correcting function in distortion correction processing unit 7a of image signal processor 7, the optical system itself of camera unit 4 may be shifted or tilted to reduce or remove distortions as is done with lenses associated with large format cameras, in which case, however, a complicated guiding mechanism and driving mechanism are required for shifting or tilting the optical system. Therefore, it is much more economical to remove distortions through software processing.

In the document camera of the present invention, the image capture means for use in capturing a document is positioned above the script base in a lateral region offset from the center thereof, so that the image capture means will not interfere with the head or hand of the user of the document camera even when the user changes from one document to another on the script base or points to a document for explanation, resulting in the realization of smooth handling.

When a light source is provided for illuminating a document, the light source is placed in proximity to the image capture means, so that regularly reflected light of light emitted from the light source will not be directly incident on the optical system of the image capture means. Therefore, even if a lustrous paper is used as a document, it is possible to prevent a deteriorated image due to the introduction of the regularly reflected light from the light source, for example, halation and the like, to produce a precise image.

Further, since the image signal processor is provided between the image capture means and signal output means for correcting distortions in an image captured by the imager device, the image can be corrected for distortions caused by a substantial "diagonal shot," to produce an appropriate image.

Particularly, the image signal processor has a keystone distortion correcting function for correcting an optical distortion caused by an inclination of the optical axis of the optical system with respect to the script base, so that the document camera of the present invention can appropriately correct a trapezoidal distortion, which would largely affect the accuracy of image, to produce a good image.

Moreover, since the image signal processor has a correction factor adjusting function for varying a correction factor in accordance with a change in the focal distance of the optical system, a correction for distortions suitable for a particular focal distance of the optical system is realized in accordance with a change in the focal distance of the optical system which may comprise a zoom lens, i.e., in accordance with emphasized perspective and compressed perspective.

Also, since the image signal processor further has a distortion correcting function for correcting a distortion which varies with a change in the focal distance of the optical system, the document camera of the present invention can correct a barrel or a pincushion distortion, which is present depending on the focal distance, to produce a more appropriate image.

It is to be understood, however, that although the characteristics and advantages of the present invention have been set forth in the foregoing description, the disclosure is illustrative only, and changes may be made in the arrangement of the parts within the scope of the appended claims.

## Claims

1. A document camera comprising a script base for placing thereon a document to be captured, image capture means for capturing the document placed on said script base to generate a moving image signal, and signal output means for delivering the moving image signal to the outside, **characterized in that**:
said image capture means has an imager device and an optical system integrally incorporated therein; and
said image capture means is disposed above said script base at a location away from the center of said script base.

2. The document camera according to claim 1, **characterized by** further comprising a light source placed in proximity to said image capture means for illuminating the document on said script base.

3. The document camera according to claim 1 or 2, **characterized by** further comprising an image signal processor disposed between said image capture means and said signal output means for correcting a distortion of an image captured by said imager device.

4. The document camera according to claim 3, **characterized in that** said image signal processor comprises a keystone distortion correcting function for correcting an optical distortion caused by an inclination of the optical axis of said optical system with respect to said script base.

5. The document camera according to claim 4, **characterized in that** said image signal processor further comprises a correction factor adjusting function for varying a correction factor in accordance with a change in the focal distance of said optical system.

6. The document camera according to claim 4 or 5, **characterized in that** said image signal processor further comprises a distortion correcting function for correcting a distortion which varies with a change in the focal distance of said optical system in addition to said keystone distortion correcting function.
